# EUROPÄISCHE PATENTANMELDUNG

(11) **EP 0 681 096 A1**
(43) Veröffentlichungstag der Anmeldung: **08.11.1995**
(21) Anmeldenummer: 95100793.9
(22) Anmeldetag: 21.01.1995
(51) Int. Cl.: F01N 7/08, F16L 27/111, F16L 51/02

(54) **Flexibles Leitungselement für Abgasleitungen von Verbrennungsmotoren bei Kraftfahrzeugen**

(30) Priorität: 05.05.1994 DE 4415860
(71) Anmelder: Witzenmann GmbH Metallschlauch-Fabrik Pforzheim, D-75175 Pforzheim (DE)
(72) Erfinder: Lasareff, Juliane, D-76137 Karlsruhe (DE); Hugger, Hermann, D-75175 Pforzheim (DE); Marcoux, Jean-Louis, F-77131 Touquin (FR)
(74) Vertreter: Lemcke, Rupert, Dipl.-Ing.

(57) **Zusammenfassung**

Es wird ein flexibles Leitungselement für Abgasleitungen von Verbrennungsmotoren bei Kraftfahrzeugen angegeben, wobei das Leitungselement einen mit zylindrischen Anschlußenden (5,6) versehenen, schraubengangförmig oder ringgewellten Balg (3) aus Metall aufweist und einen den Balg (3) unmittelbar umgebenden Metalldrahtschlauch (4). Dabei ist vorgesehen, daß der Metalldrahtschlauch (4) als wenigstens einlagiger am Balg (3) eng anliegender Schlauch (4) aus Maschenware (Gestricke, Gewirke) ausgebildet ist.

## Beschreibung

Die Erfindung betrifft ein flexibles Leitungselement für Abgasleitungen von Verbrennungsmotoren bei Kraftfahrzeugen mit einem mit zylindrischen Anschlußenden versehenen schraubengangförmig oder ringgewellten Balg aus Metall und einem den Balg unmittelbar umgebenden Metalldrahtschlauch, wobei Balg und Schlauch endständig zur Bildung der Anschlußenden des Leitungselementes miteinander - gegebenenfalls innerhalb eines zylindrischen Stützringes und mit diesem durch gegenseitiges Anheften - verbunden sind.

Ein derartiges Leitungselement ist durch das DE-GM 90 16 333 bekannt. Es wird in der Regel als Zwischenstück in die im übrigen weitgehend starre Abgasleitung eingebaut, um Bewegungen und Schwingungen aufzunehmen und von der Weiterleitung an benachbarte Bauteile abzukoppeln, wie sie von der elastisch gelagerten Antriebsmaschine, Erschütterungen des Fahrzeuges, temparaturbedingten Längenänderungen etc. entstehen. Dabei gilt neben der Eigenschaft der Flexibilität die Aufmerksamkeit der Frage der Wärmedämmung, der Schallabsorption und der Dichtigkeit gegen Austritt von Abgasen, insbesondere in Verbindung mit Katalysator-Fahrzeugen und verschärften Bestimmungen hinsichtlich Schall- und Abgasemissionen.

Zur Dämpfung ist im bekannten Falle in den Balg ein gegebenenfalls ohne Dichtungseinlage gewickelter Metallschlauch eingesetzt. Außerdem ist der Balg von einem an beiden Balgenden festgelegten Geflechtsschlauch umgeben, der ebenfalls der Dämpfung dient und im übrigen den Balg gegen übermäßige Längenausdehnung abstützt.

Der eingesetzte Metallschlauch verteuert jedoch das Bauteil. Außerdem beruht seine Dämpfungscharakteristik zumindest teilweise auf der Reibung innerhalb der Metallschlauchwindungen, was zu Verschleiß und Änderung der Dämpfungseigenschaften führt. Der Geflechtsschlauch hat andererseits die unangenehme Eigenschaft, sich bei Längenänderungen radial auszudehnen bzw. zusammenzuziehen, was bei bestimmten Betriebszuständen des Motors zu einem Geflechtsschlagen gegenüber dem Balg und damit zu einer lauten und unangenehmen Geräuschentwicklung führen kann.

Aufgabe der Erfindung ist es daher, ein Leitungselement der eingangs genannten Art zu vereinfachen bei gleichzeitig guter Entkopplungswirkung im hoch- und niederfrequenten Bereich sowohl hinsichtlich großer als auch kleiner Amplituden. Gleichzeitig soll die Entwicklung störender Schlaggeräusche unterbunden werden.

Die Aufgabe ist erfindungsgemäß dadurch gelöst, daß der Metalldrahtschlauch als wenigstens einlagiger, im wesentlichen an den radial außenliegenden Wellenbergen des Balges eng anliegender Schlauch aus Maschenware (Gestricke, Gewirke) ausgebildet ist. Dabei soll der Metalldrahtschlauch in der Regel nur an den Wellenbergen anliegen. Je nach Anforderungen und Betriebszuständen kommt es jedoch auch in Frage, daß der Metalldrahtschlauch etwas in den Raum zwischen den Wellenbergen radial eingezogen verläuft.

Diese Maßnahme hat die Wirkung, daß sich bei Längenänderungen des Balges die Maschen des Gestrickes oder Gewirkes in Axialrichtung des Leitungselementes ineinander verschieben können. Damit entfällt praktisch eine Änderung des Durchmessers des Schlauches und es kann eine schlagende Bewegung gegenüber dem Balg nicht mehr auftreten. Andererseits ist der Gestrickeschlauch bzw. Gewirkeschlauch aber in der Lage, Axialbewegungen des Balges in beiden Richtungen weich abzustützen, da die Verschiebbarkeit der Maschen sowohl in Zug- als auch Druckrichtung auf Grenzen stößt, die jedoch in verhältnismäßig weicher Art jeweils erreicht werden.

Darüber hinaus ergibt sich nunmehr durch den Gestrickeschlauch bzw. den Gewirkeschlauch eine bessere Entkopplungswirkung durch eine niedrigere Federrate, die praktisch ausschließlich durch die Bauform des Balges bestimmt ist, und es sind die Betriebseigenschaften über die Lebensdauer des Leitungselementes praktisch gleichbleibend. Schließlich ist das erfindungsgemäße Leitungselement verhältnismäßig preisgünstig und hat ein herabgesetztes Gewicht, wobei auch die Temparaturbelastung des Balges durch verbesserte Abstrahlmöglichkeit über den Gestrickeschlauch verbessert ist.

Als zweckmäßig hat es sich erwiesen, daß die Maschen des Schlauches aus Maschenware sich im wesentlichen in Axialrichtung des Leitungselementes erstrecken, und daß der Draht der Maschenware als endlos um das Leitungselement umlaufender Draht verarbeitet ist. Damit ergibt sich ein nahtloser Schlauch mit in Axialrichtung des Leitungselementes guter Bewegungsmöglichkeit.

Um das Verhalten des Schlauches aus Maschenware weiterhin zu beeinflussen, kann vorgesehen sein, daß der Draht der Maschenware mehradrig ist, was zu einer Erhöhung der Flexibilität bzw. zu einer Beeinflussung der Steifigkeit herangezogen werden kann. Außerdem kann vorgesehen sein, daß der Draht der Maschenware mit gegenüber dem Balg gleitfähigem Material beschichtet ist. Ein solches Material kann beispielsweise Messing sein, um die Reibung zwischen Balg und Schlauch zu verringern.

Fernerhin kann es für den Balg, der ein- oder mehrlagig ausgebildet sein kann, vorteilhaft sein, daß der Übergang zwischen Balg und Balganschlußenden in einer zwischen Außendurchmesser des Balges und Innendurchmesser der Balganschlußenden abgestuften Form ausgebildet ist, wobei der Übergang wenigstens eine im Durchmesser reduzierte, endständige Welle aufweisen kann und wobei außerdem vorgesehen sein kann, daß der Übergang ausgehend von der endständigen Balgwelle eine in Radialrichtung stufenförmig abgesetzte Ausbildung der Balganschlußenden aufweist. Damit ist im Bereich der Balganschlußenden ein besonders großer Querschnittssprung und die damit einhergehende Belastung auch für den Gestrickeschlauch bzw. den Gewirkeschlauch vermieden.

Zur Stabilisierung der Anschlußenden des Balges und zur Erleichterung der Einschweißung des Bauteiles kann vorgesehen sein, daß in die Anschlußenden ein zylindrischer Innenring eingesetzt ist und die Anschlußenden durch Reduktion des Stützringes und/oder Aufweitung des Innenringes miteinander verpresst sowie die Teile untereinander durch Anheften verbunden sind. Dabei kann außerdem vorgesehen sein, daß in das stromaufwärts gelegene Anschlußende ein Innenschutzrohr für den Balg eingesetzt ist, daß das Innenschutzrohr sich über wenigstens einen Teil des gewellten Balgbereiches erstreckt, und daß der Außendurchmesser des Innenschutzrohres innerhalb des gewellten Balgbereiches geringer als dessen lichter Innenquerschnitt ist. Auf diese Weise läßt sich die Innenseite des Balges gegenüber dem Abgas schützen, ohne daß die Flexibilität des Leitungselementes beeinträchtigt wird. Zur konstruktiven Vereinfachung können bezüglich des stromaufwärts gelegenen Anschlußendes Innenring und Innenschutzrohr einteilig miteinander verbunden sein.

Eine andere Möglichkeit besteht darin, daß in den Balg eine weich-flexible Auskleidung aus gegen das Abgas widerstandsfähigem Material eingesetzt und mit den Anschlußenden des Balges verbunden ist. Auf diese Weise sind die nach innen offenen Balgwellen zur Verhinderung einer Geräuschentwicklung abgedeckt. Die Auskleidung kann beispielsweise durch einen weich gewickelten Metallschlauch gegeben sein.

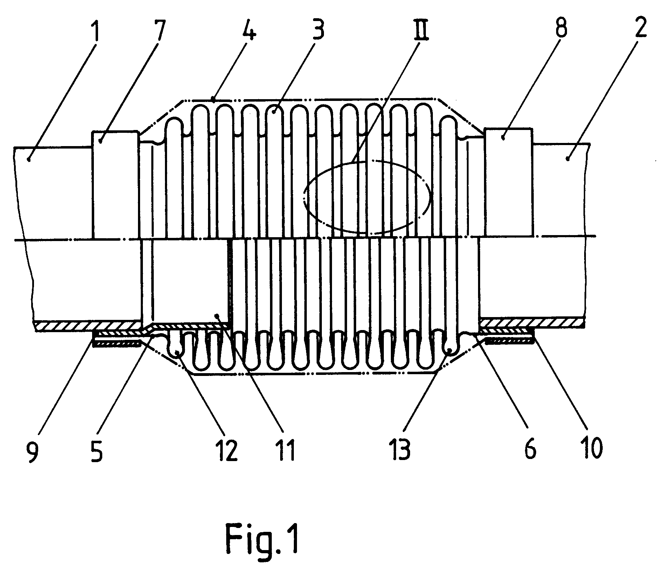

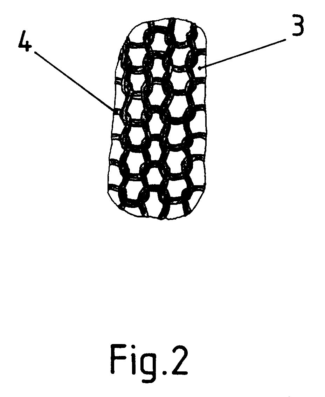

Weitere Merkmale und Einzelheiten der Erfindung ergeben sich aus der nachfolgenden Beschreibung einer Ausführungsform, die auf der Zeichnung in Figur 1 vereinfacht in teilweise geschnittener Form dargestellt ist, während Figur 2 einen Ausschnitt II einer tatsächlichen Außenansicht darstellt.

Figur 1 zeigt die Enden zweier koaxial aufeinander zu gerichteter Rohrteile 1,2 einer Abgasleitung, die gasdicht im wesentlichen durch einen zwischengesetzten Metallbalg 3 miteinander verbunden sind. Der Metallbalg 3 ist im vorliegenden Falle ringförmig gewellt und kann ein- oder mehrlagig sein.

Über den Metallbalg 3 ist ein nahtloser Drahtgestrickeschlauch 4 gezogen, der bis an die hohlzylindrisch ausgebildeten Anschlußenden 5,6 des Balges 3 reicht. Dort sind die Enden von Stützringen 7,8 aus Metall umgeben. In die Enden sind Innenringe 9,10 aus Metall eingesetzt. Die gegenseitige Festlegung der die Enden des Leitungselementes bildenden Teile geschieht durch radiale Aufweitung der Innenringe 9,10 und radiale Reduktion der Stützringe 7,8 sowie deren gegenseitiger Verbindung durch über den Umfang verteilte, nicht dargestellte Schweißpunkte. Im Ergebnis haben dann die Innenringe 9,10 einen Innendurchmesser, der dem Außendurchmesser der Rohrteile 1,2 entspricht.

Wie aus Figur 2 ersichtlich, ist der auf der Außenseite des Balges 3 anliegende Gestrickeschlauch aus einem mehradrigen Draht unter Bildung von sich in Axialrichtung des Leitungselementes erstreckenden, gleichartigen Maschen hergestellt. Der Gestrickeschlauch begrenzt die sich während des Betriebs ergebende unterschiedliche Länge des Balges 3 in beiden Richtungen, in dem sich gleichermaßen ineinander greifende Maschen des Gestrickeschlauches bis an die jeweilige Grenze der Möglichkeit gegeneinander verschieben. Diese Grenzen werden dabei unter entsprechender Verformung der jeweiligen Maschen weich angelaufen, so daß eine ruckartige Beendigung einer Axialbewegung vermieden ist, die zu unangenehmen Geräuschen und zur Beeinträchtigung der Bauteile führen könnte. Während solcher Axialbewegungen behält der Gestrickeschlauch praktisch seinen Durchmesser bei , so daß es auch nicht zu einer schlagenden Bewegung zwischen Balg 3 und Gestrickeschlauch 4 kommen kann.

Figur 2 zeigt untereinander gleich ausgebildete Maschen. Es besteht jedoch selbstverständlich die Möglichkeit, Art und Größe der Maschen insbesondere über die Länge des Gestrickeschlauches unterschiedlich auszubilden, um an bestimmten Stellen entsprechend unterschiedliche Verhaltensweisen des Gestrickeschlauches zu erzeugen.

Figur 1 zeigt außerdem, daß der Innenring 9, der im vorliegenden Falle stromaufwärts angeordnet ist, zu einem Innenschutzrohr 11 verlängert ist, das sich in den gewellten Bereich des Balges 3 hinein erstreckt und dessen Außendurchmesser mit Abstand kleiner als der lichte Innenquerschnitt des Balges 3 ist. Durch das Innenschutzrohr wird der Gasstrom weitgehend von der Innenseite des Balges 3 ferngehalten, um den Balg vor dem Gasstrom zu schützen und unangenehme Strömungsgeräusche des Gases gegenüber dem Balgwellen zu vermeiden.

Wie aus Figur 1 schließlich ersichtlich, ist der Übergang zwischen Balg 3 und Balganschlußenden 5,6 in einer zwischen Aussendurchmesser des Balges und Innendurchmesser der Balganschlußenden abgestufter Form ausgebildet, wozu der Übergang wenigstens eine im Durchmesser reduzierte endständige Balgwelle 12,13 aufweist, so daß insbesondere die Durchmesserreduktion des Gestrickeschlauches 4 in Richtung auf die Balganschlußenden nicht zu abrupt erfolgt.

## Patentansprüche

1. Flexibles Leitungselement für Abgasleitungen von Verbrennungsmotoren bei Kraftfahrzeugen mit einem mit zylindrischen Anschlußenden versehenen, schraubengangförmig oder ringgewellten Balg aus Metall und einem den Balg unmittelbar umgebenden Metalldrahtschlauch, wobei Balg und Schlauch endständig zur Bildung der Anschlußenden des Leitungselementes miteinander - gegebenenfalls innerhalb eines zylindrischen Stützringes und mit diesem durch gegenseitiges Anheften - verbunden sind,
dadurch gekennzeichnet,
daß der Metalldrahtschlauch als wenigstens einlagiger, im wesentlichen an den radial außenliegenden Wellenbergen des Balges (3) eng anliegender Schlauch (4) aus Maschenware (Gestricke, Gewirke) ausgebildet ist.

2. Leitungselement nach Anspruch 1,
dadurch gekennzeichnet,
daß die Maschen des Schlauches (4) aus Maschenware sich im wesentlichen in Axialrichtung des Leitungselementes erstrecken.

3. Leitungselement nach Anspruch 1,
dadurch gekennzeichnet,
daß der Draht der Maschenware als endlos um das Leitungselement umlaufender Draht verarbeitet ist.

4. Leitungselement nach Anspruch 1,
dadurch gekennzeichnet,
daß der Draht der Maschenware mehradrig ist.

5. Leitungselement nach Anspruch 1,
dadurch gekennzeichnt,
daß der Draht der Maschenware mit gegenüber dem Balg (3) gleitfähigen Material beschichtet ist.

6. Leitungselement nach Anspruch 1,
dadurch gekennzeichnet,
daß der Übergang zwischen Balg (3) und Balganschlußenden (5,6) in einer zwischen Außendurchmesser des Balges und Innendurchmesser der Balganschlußenden abgestuften Form ausgebildet ist.

7. Leitungselement nach Anspruch 6,
dadurch gekennzeichnt,
daß der Übergang wenigstens eine im Durchmesser reduzierte, endständige Welle (12,13) aufweist.

8. Leitungselement nach Anspruch 6 oder 7,
dadurch gekennzeichnet,
daß der Übergang ausgehend von der endständigen Balgwelle (12,13) eine in Radialrichtung stufenförmig abgesetzte Ausbildung der Balganschlußenden aufweist.

9. Leitungselement nach Anspruch 1,
dadurch gekennzeichnet,
daß der Balg (3) mit zylindrischen Balganschlußenden (5,6) versehen ist, deren Innendurchmesser kleiner als der lichte Innenquerschnitt es Balges (3) ist.

10. Leitungselement nach Anspruch 1,
dadurch gekennzeichnet,
daß in die Anschlußenden (5,6) ein zylindrischer Innenring (9,10) eingesetzt ist und die Anschlußenden durch Reduktion des Stützringes (7,8) und/oder Aufweitung des Innenringes (9,10) miteinander verpreßt sowie die Teile untereinander durch Anheften verbunden sind.

11. Leitungselement nach Anspruch 1,
dadurch gekennzeichnet,
daß in das stromaufwärts gelegene Anschlußende (5) ein Innenschutzrohr (11) für den Balg (3) eingesetzt ist, daß das Innenschutzrohr sich über wenigstens einen Teil des gewellten Balgbereiches erstreckt, und daß der Außendurchmesser des Innenschutzrohres (11) innerhalb des gewellten Balgbereiches geringer als dessen lichter Innenquerschnitt ist.

12. Leitungselement nach Anspruch 10 und 11,
dadurch gekennzeichnet,
daß Innenring (9) und Innenschutzrohr (11) einteilig miteinander verbunden sind.

13. Leitungselement nach Anspruch 1,
dadurch gekennzeichnet,
daß in den Balg (3) ein weich-flexible Auskleidung aus gegen das Abgas widerstandsfähigem Material eingesetzt und mit den Anschlußenden (5,6) des Balges verbunden ist.
